(19) Europäisches Patentamt
European Patent Office
Office européen des brevets

(11) **EP 1 098 459 B1**

(12) **EUROPÄISCHE PATENTSCHRIFT**

(45) Veröffentlichungstag und Bekanntmachung des Hinweises auf die Patenterteilung:
**05.12.2007 Patentblatt 2007/49**

(51) Int Cl.:
***H04B 10/148*** *(2006.01)*

(21) Anmeldenummer: **00123291.7**

(22) Anmeldetag: **27.10.2000**

(54) **Verfahren zur Synchronisation eines lokalen Oszillators in einem optischen Homodynempfänger**

Synchronisation method of a local oscillator in an optical homodyne receiver

Méthode de synchronisation d'un oscillateur local d'un récépteur optique homodyne

(84) Benannte Vertragsstaaten:
**AT BE CH CY DE DK ES FI FR GB GR IE IT LI LU MC NL PT SE**

(30) Priorität: **03.11.1999 AT 184899**

(43) Veröffentlichungstag der Anmeldung:
**09.05.2001 Patentblatt 2001/19**

(73) Patentinhaber: **Oerlikon Space AG
8052 Zürich (CH)**

(72) Erfinder:
• **Kudielka, Klaus, Dr.
8049 Zürich (CH)**
• **Leeb, Walter, Prof. Dr.
1140 Wien (AT)**

(74) Vertreter: **OK pat AG
Chamerstrasse 50
6300 Zug (CH)**

(56) Entgegenhaltungen:
**EP-A- 0 535 494**

• **KUDIELKA K H ET AL: "Optical homodyne PSK receiver: phase synchronization by maximizing baseband signal power" 1999 IEEE LEOS ANNUAL MEETING CONFERENCE PROCEEDINGS. LEOS'99. 12TH ANNUAL MEETING. IEEE LASERS AND ELECTRO-OPTICS SOCIETY 1999 ANNUAL MEETING (CAT. NO. 99CH37009), 1999 IEEE LEOS ANNUAL MEETING CONFERENCE PROCEEDINGS. LEOS'99. 12TH ANNUAL MEETING, SA, Seiten 295-296 vol.1, XP002277172 1999, Piscataway, NJ, USA, IEEE, USA ISBN: 0-7803-5634-9**

**Beschreibung**

Technisches Gebiet

Die vorliegende Erfindung befaßt sich mit hochempfindlichen Empfängern für Freiraum-Laserkommunikationssysteme. Solche Systeme sollen in der nahen Zukunft breitbandige Kommunikation über große Distanzen, z.B. zwischen Satelliten oder zwischen einer Bodenstation und einem Satelliten, ermöglichen.

Hintergrund der Erfindung

Um in einem optischen Empfänger die bestmögliche Empfindlichkeit (d.i. die kleinste Eingangs-Signalleistung, die für eine gegebene Bitfehlerwahrscheinlichkeit benötigt wird) zu erreichen, wählt man typischerweise eine binäre Phasenumtastung als Modulationsformat und den sogenannten Homodynempfang als Empfängerkonzept. Die theoretisch erreichbare Empfindlichkeit eines solchen Empfängers beträgt 9 Photonen pro Bit für eine Bitfehlerwahrscheinlichkeit von $10^{-9}$.

Um dieser theoretischen Grenze möglichst nahe zu kommen, muß unter anderem der lokale Oszillator (LO) des Empfängers mit dem Träger des Datensignals phasenstarr synchronisiert werden.

Dies wird im Allgemeinen durch eine Phasenregelschleife bewerkstelligt, welche die Momentanfrequenz (und daher auch die Phase) des lokalen Oszillators beeinflußt. Ziel ist es, eine konstante Phasendifferenz zwischen dem Datenträger und dem lokalen Oszillator beim optischen Mischerelement des Empfängers zu erreichen. Nur dann arbeitet der Empfänger als Homodynempfänger, d.h. das optische, phasenmodulierte Eingangssignal wird direkt in das (elektrische) Basisband umgesetzt.

Die Synchronisation des lokalen Oszillators stellt bei der praktischen Umsetzung des Homodynempfängerkonzeptes eines der Hauptprobleme dar.

Die wichtigsten Anforderungen sind:

- Abweichungen vom Zustand der perfekten Synchronisation müssen so klein wie möglich gehalten werden.
- Der Anteil der optischen Eingangsleistung, der zur Ermittlung des Phasenfehlers notwendig ist, soll ebenfalls möglichst klein sein.
- Die Bauteile zur Ermittlung und Minimierung des Phasenfehlers müssen zuverlässig sein und dürfen das Datensignal nicht (oder nur unwesentlich) abschwächen.

Bis Heute wurde eine Anzahl von verschiedenen Synchronisationsverfahren vorgeschlagen bzw. experimentell verifiziert. Die im Folgenden angeführten Konzepte unterscheiden sich hauptsächlich durch die Art der Ermittlung des Phasenfehlers:

- Bei dem sogenannten "Pilotträgerkonzept" wird dem Datensignal ein kleiner Restträger überlagert. Dieses Synchronisationsverfahren benötigt einen gleichstromgekoppelten Photodetektor, wie von A.L. Scholtz et al. in "Realization of a 10-im homodyne receiver., J. Lightwave Technol., LT-5(4), S. 625 - 632, 1987, beschrieben.
- L.G. Kazovsky beschreibt in "Decision-driven phase-locked loop for optical homodyne receivers: Performance analysis and laser linewidth requirements", J. Lightwave Technol., LT-3(6), S. 1238 - 1247, 1985, eine sogenannte "Costas-Schleife", welche keine Gleichstromkopplung benötigt, aber ein optisches 90°-Hybrid und zwei breitbandige Empfängerzweige.
- Das "Syncbit"-Konzept wurde von B. Wandernoth in dem Artikel "1064nm, 565Mbit/s PSK transmission experiment with homodyne receiver using synchronization bits", Electron. Lett., 27(19), S. 1692 - 1693, 1991 und in der deutschen Patentschrift mit Titel "Verfahren zur Trägerrückgewinnung in einem optischen PSK-Homodynempfänger", DE 41 10 138-C1, 1991, beschrieben. Das "Syncbit"-Konzept vermeidet die Probleme der o.g. Verfahren durch Einfügen von phasenverschobenen "Synchronisationsbits" in den Datenstrom. Dieses Konzept benötigt aufwendige, schnelle Digitalelektronik, um die Synchronisationsbits aufzuspüren und den Phasenfehler zu ermitteln. Details zum "Syncbit"-Konzept sind auch der Europäischen Patentanmeldung der Firma Contraves Space AG, mit Titel "Optisches Intersatelliten-Kommunikationssystem zum Aussenden eines modulierten Laserstrahls"' Anmeldenummer 00112884.2, zu entnehmen.
- Beim "Switched carrier"-Verfahren, wie von W. Glatt et al. in "Optical PSK homodyne system using a switched residual carrier for phase synchronization", Electron. Lett., 32(15), S. 1386 - 1387, 1996 beschrieben, wird im Sender die Phase des Trägersignals leicht moduliert. Im Empfänger wird durch Multiplikation des Basisbandsignals mit dem regenerierten Datensignal der Phasenfehler ermittelt. Details zu einem ähnlichen Ansatz sind in der Europäischen Patentanmeldung mit Publikationsnummer EP 535494-A2 beschrieben. Diese Europäischen Patentanmeldung trägt den Titel "Optical homodyne receiver for PSK signals".
- C. Rapp beschreibt in "Modulated residual carrier method with envelope processing" Konferenzproceedings CRL International Symposium on Optical Communications and Sensing toward the next Century, Tokio, Seiten 215 -216, 1999 ein ähnliches Konzept, welches den Phasenhub im Sender variiert. Dadurch kann man den Phasenfehler durch Hüllkurvendetektion - ohne Zuhilfenahme des Datenregenerators - bestimmen.

- Ein weiteres neuartiges Konzept wird von F. David in "New phase synchronization method for optical BPSK homodyne receivers''' Proc. CLEO'99, Seite 434, 1999 beschrieben. Es verwendet ausschließlich die üblicherweise vorhandene Begrenzung der Bandbreite des Phasenmodulators im Sender und die daraus resultierende Asymmetrie des Augendiagramms, benötigt aber den wiedergewonnenen Symboltakt zur Bestimmung des Phasenfehlers.

In der Europäischen Patentanmeldung mit der Publikationsnummer EP-A 535494 ist ein optischer Homodynempfänger für PSK-Signale beschrieben, der eine Phasenregelschleife enthält. Ein anderer optischer PSK-Homodynempfänger ist aus der publizierten Deutschen Patentanmeldung DE 4110138-C1 bekannt.

Ein weiterer optischer Homodynempfänger ist aus der US-Patentschrift US 5,007,106 bekannt.

Aufgabe der Erfindung ist es daher, eine Vorrichtung und ein Verfahren für die Synchronisation eines lokalen Oszillators zu schaffen.

Es ist eine weitere Aufgabe der Erfindung ein verbessertes optisches Kommunikationssystem - z.B. für die Intersatelliten-Kommunikation - zu schaffen.

Die **Lösung** dieser Aufgabe erfolgt erfindungsgemäss

- durch ein Verfahren nach Anspruch **1**, und
- durch einen Homodynempfänger nach Anspruch **12**, und
- durch ein Intersatelliten-Kommunikationssystem nach Anspruch 20.

Vorteilhafte Weiterbildungen des erfindungsgemässen Verfahrens werden durch die abhängigen Ansprüche **2** bis **11** definiert. Weiterbildungen des erfindungsgemässen Empfängers werden durch die abhängigen Ansprüche **13** bis **20** definiert.

Weitere Eigenschaften und Vorteile der Erfindung werden im Folgenden anhand der Beschreibung und mit Bezug auf die Zeichnung ausführlich beschrieben. Es zeigen:

**Fig. 1**    eine beispielhafte Ausführungsform eines Homodynempfängers nach der Erfindung;

**Fig. 2**    eine schematisierte Darstellung eines Homodynempfängers nach der Erfindung.

Beschreibung der Erfindung

Im Folgenden wird das Grundprinzip der vorliegenden Erfindung erläutert.

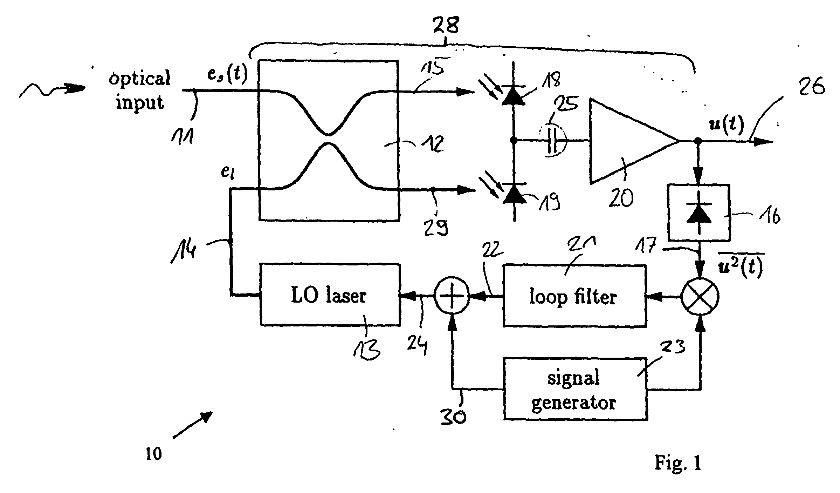

Mit der vorliegenden Erfindung wird ein neuartiges Verfahren zur Synchronisation eines lokalen Oszillators in einem Homodynempfänger bereit gestellt. Eine mögliche Realisierung, wie sie etwa für einen Einsatz im optischen Bereich zweckmäßig ist, wird in Figur 1 dargestellt. Ein Homodynempfänger ist ein Überlagerungsempfänger. Wie in dieser Figur gezeigt, weist ein optischer Homodynempfänger 10 gemäß der vorliegenden Erfindung einen optischen Eingang 11 auf, der auf ein einfaches optisches 180°-Hybrid 12 geleitet wird. Das übertragene Kommunikationssignal $e_s(t)$ wird über den optischen Eingang 11 empfangen. Ein lokaler Laseroszillator (LO Laser) 13 generiert ein optisches Signal, das über den optischen Kanal 14 zu dem Mischer 28 (auch Frontend genannt) geleitet wird. Dieser Mischer 28 umfasst das Hybrid 12, zwei Photodioden 18, 19, und einem Verstärker 20. Das Kommunikationssignal $e_s(t)$ am Eingang 11 wird mit dem von dem lokalen Laseroszillator 13 generierten optischen Signal am Eingang 13 in ein Basisbandsignal u(t) auf der Ausgangsseite 26 des Mischers 28 konvertiert. Der Mischer 28 weist einen elektrooptischer Wandler mit zwei abgeglichenen Photodioden 18 und 19 in Differenzschaltung und einem wechselstromgekoppelten Verstärker 20 auf, der als Impedanzwandler fungiert. Zu diesem Zweck ist der Verstärker 20 kapazitiv über den Kondensator 25 mit den Photodioden 18 und 19 verknüpft. Von den zwei Ausgängen des Hybrid 12 liefert der eine Ausgang 15 ein optisches Summensignal $(e_s + e_i)$ und der andere Ausgang 29 ein optisches Differenzsignal $(e_s - e_i)$. Diese beiden optischen Signale wirken auf je eine der Photodioden 18 bzw. 19, die deren Leistungen in entsprechende elektrische Ströme umwandeln. Am Ausgang 26 liefert der Verstärker 20 durch Umwandlung des Differenzstroms das Basisbandsignal u(t).

Die Erfindung beruht auf der Tatsache, daß die Leistung des Basisbandsignals u(t) am Ausgang 26 des Mischers 28 als Indikator für die Phasendifferenz zwischen dem Träger des Kommunikationssignal $e_s(t)$ und dem Signal $e_i$ des lokalen Oszillator 13 herangezogen werden kann. Die Leistung ist maximal wenn der angestrebte Phasenzustand erreicht ist, und minimal, wenn die Phasendifferenz um $\pm 90°$ vom Optimum abweicht. Mit einem Maximum-Regler kann demnach der erwünschte Phasenzustand akquiriert und gehalten werden.

Zur theoretischen Beschreibung der Erfindung folgt eine kurze mathematische Betrachtung. Die Eingangssignale des Mischers 28 werden durch die Phasoren

$$e_s(t) = E_s \, e^{j \, (\omega s \, + \, d(t))} \tag{1a}$$

und

$$e_l = E_l \, e^{j \, (\phi_l)} \tag{1b}$$

beschrieben. $E_s$ und $E_i$ bezeichnen die Amplituden der elektrischen Felder, $\varnothing_s$ und $\varnothing_i$ beschreiben die momentanen Phase des unmodulierten Datensignals bzw. des lokalen Oszillators 13. d(t) ist das stochastische Modulationssignal, welches zwischen $\pm$o/2 variiert. Es kann gezeigt werden, daß das Ausgangssignal am Ausgang 17 des elektrischen Leistungssensors 16 folgender Gleichung genügt:

$$\overline{u^2(t)} = I_0{}^2 \left[ \frac{\alpha + \beta}{2} + \frac{\alpha - \beta}{2} \cos 2(\phi_s - \phi_i) \right],$$

wobei

$$\alpha = \overline{\left[ z(t) * \cos d(t) \right]^2},$$

$$\beta = \overline{\left[ z(t) * \sin d(t) \right]^2}$$

$$I_0 = \frac{S_1 + S_2}{2} E_s E_l$$

gilt.

Der Balken bedeutet Mittelung über eine große Anzahl von Bits und der Stern bedeutet Faltung. $S_1$ und $S_2$ bezeichnen die Empfindlichkeit der Photodioden 18 und 19 und z(t) ist die Impulsantwort des wechselstromgekoppelten Verstärkers 20. Falls ein separates Filter verwendet wird, ist dessen Übertragungsfunktion in z(t) inkludiert. Die obige Gleichung, die den Mittelwert des Signals am Ausgang 17 (über eine ausreichende Anzahl von Bits) beschreibt bedeutet, daß das Ausgangssignal des Leistungsdetektors 16 nur von der Phasendifferenz zwischen dem Kommunikationssignal und dem Ausgangssignal des lokalen Oszillator $\varnothing_s$ - $\varnothing_i$ abhängt und zwischen

$$\alpha \, I_0{}^2$$

(Minimum) und

$$\beta \, I_0{}^2$$

(Maximum) variiert.

Um den gewünschten Zustand $\varnothing_s - \varnothing_i = \pm o/2$ zu erhalten, muß der Mittelwert des Ausgangssignals am Ausgang 17 maximiert werden. Eine für diesen Zweck sehr geeignete Methode ist, die Phase $\varnothing_i$ des lokalen Oszillators 13 mit einer kleinen sinusförmigen Störung 30 zu beaufschlagen (z.B. 0,1 rad) und die resultierende Leistungsschwankung des Mittelwerts des Ausgangssignals am Ausgang 17 synchron zu demodulieren. Die Frequenz dieser Störung sollte deutlich über der Bandbreite der Regelschleife liegen. Eine solche Störung 30 kann zum Beispiel durch einen separaten Signalgenerator (Phasengenerator) 23, wie in Figur 1 gezeigt, erzeugt werden. Aus der synchronen Demodulation ergibt sich eine sinusförmige Charakteristik des Phasendetektors.

Diese Maßnahme ergibt mit anderen Worten eine sinusförmige Phasendetektorkennlinie am Eingang des Schleifenfilters 21. Der Ausgang 22 des Schleifenfilters 21 steuert die Momentanfrequenz des lokalen Oszillators 13, womit die Phasenregelschleife (phase-locked loop) geschlossen ist. Zu diesem Zweck ist der Ausgang 22 des Schleifenfilters 21 mit dem Frequenzkontrolleingang 24 des lokalen Oszillators 13 verbunden. Die Werte von $\alpha$ und $\beta$ hängen nur von den Frequenzantworten des Phasenmodulators im Sender und des optischen Frontends 28 im Empfänger 10 ab.

Um die bestmögliche Empfindlichkeit zu erzielen, sollte das Verhältnis $\beta/\alpha$ möglichst groß sein, bzw. das Datensignal d(t) für die meiste Zeit jeder Bitperiode nahe bei $\pm o/2$ liegen.

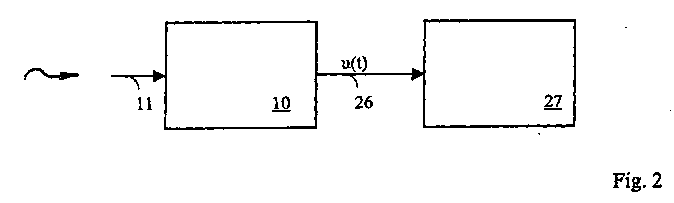

Der Datenausgang 26 des erfindungsgemässen Homodynempfängers 10 kann mit einer Verarbeitungseinheit 27 verknüpft werden, die z.B. einen Daten-Entscheider und einen Fenster-Komparator (auch Fenster-Diskriminator genannt) aufweist, wie schematisch in Figur 2 dargestellt. Eine solche Verarbeitungseinheit 27 ist zum Beispiel aus der Europäischen Patentanmeldung mit Publikationsnummer EP-A 959571, der Firma Contraves Space AG, bekannt und dient der Daten-Rückgewinnung aus dem am Eingang 11 empfangenen optischen Signal.

Wie im Zusammenhang mit der vorgängig beschriebenen Ausführungsform gezeigt wurde, ist die Phasensynchronisation durch Maximierung der Basisbandleistung weniger komplex als bisher bekannte Synchronisationsansätze. Es ist ein Vorteil der vorliegenden Erfindung, daß man ein 180°-Hybrid 12 als Teil des Mischers 28 einsetzen kann. Auch ist es von Vorteil, daß Wechselstrom gekoppeltes Frontend verwendet werden kann. Ein entscheidender Vorteil gegenüber dem "Syncbit" Verfahren bzw. dem "switched carrier" Verfahren ist das Potential für eine einfache, kostengünstige Realisierung, denn es werden keine breitbandigen Schaltkreise - weder analog noch digital - benötigt.

Mit der vorliegenden Erfindung wird ein Hauptproblem der kohärenten homodynen Übertragung, nämlich die Synchronisierung des Lokaloszillatorlasers, dessen Phase für Detektions- und Demodulationszwecke mit der empfangenen Lichtwelle synchronisiert werden soll, gelöst.

Die erfindungsgemässe Vorrichtung kann zum Beispiel vorteilhafterweise in einem optischen Intersatelliten-Kommunikationssystem eingesetzt werden.

Die oben dargelegten Ausführungsbeispiele sind lediglich als Veranschaulichung der Anwendung einer solchen Vorrichtung zu verstehen.

## Patentansprüche

1. Verfahren zur Synchronisation eines lokalen Oszillators (13) in einem Homodynempfänger (10) in Bezug auf ein optisches Kommunikationssignal, wobei der Homodynempfänger neben dem lokalen Oszillator (13) mit einstellbarer Momentanfrequenz, einen Mischer (28), einen Leistungsdetektor (16) und eine Regelelektronik (21, 23) enthält, wobei die folgenden Schritte ausgeführt werden:

   • mischen des optischen Kommunikationssignals mit einem Ausgangssignal des lokalen Oszillators (13),
   • ansteuern des Leistungsdetektors (16) mit einem am Ausgang (26) des Mischers (28) bereit gestellten Ausgangssignal (u(t)),
   • auswerten der Leistung des Ausgangssignals (u(t)) des Mischers (28) durch den Leistungsdetektor (16),
   • regeln der Momentanfrequenz des lokalen Oszillators (13), um das Ausgangssignal des Leistungsdetektors (16) zu maximieren.

2. Verfahren nach Anspruch 1, wobei es sich bei der Synchronisation um eine Phasensynchronisation handelt.

3. Verfahren nach Anspruch 1 oder 2, wobei das Ausgangssignals (u(t)) des Mischers (28) ein Basisbandsignal ist.

4. Verfahren nach Anspruch 3, wobei das Ausgangssignal des Leistungsdetektors (16) maximiert wird, indem die Leistung des Basisbandsignals (u(t)) am Ausgang (26) des Mischers (28) maximiert wird.

5. Verfahren nach Anspruch 1 oder 2, wobei die Momentanfrequenz des lokalen Oszillators (13) durch das Anlegen eines Störsignals (30) geregelt wird.

6. Verfahren nach Anspruch 5, wobei das Störsignal (30) durch die Regelelektronik (21, 23) bereit gestellt wird.

7. Verfahren nach Anspruch 1 oder 2, wobei das Auswerten der Leistung des Ausgangssignals (u(t)) des Mischers (28) über mehrere Datenbits des optischen Kommunikationssignals erfolgt.

8. Verfahren nach Anspruch 1, wobei es sich bei dem Homodynempfänger (10) um einen optischen Homodynempfänger (10) für binär modulierte Kommunikationssignale handelt.

9. Verfahren nach Anspruch 1, wobei ein Phasenfehler zwischen der Phase des optischen Kommunikationssignals und der Phase des Ausgangssignals des lokalen Oszillators (13) durch Aufprägung einer kleinen, periodischen Phasenschwankung (30) - vorzugsweise mit einer Amplitude, die kleiner als ö/2 ist - in dem lokalen Oszillator (13) und durch eine synchrone Demodulation der aus dieser Aufprägung resultierenden Schwankung des Ausgangssignals des Leistungsdetektors (16) ermittelt wird.

10. Verfahren nach Anspruch 9, wobei die periodische Phasenschwankung (30) durch eine interne Frequenzmodulation des lokalen Oszillators (13) erzeugt wird, vorzugsweise durch eine Addition mit einem Ausgangssignal eines Schleifenfilters (21), der ein Bestandteil der Regelelektronik (21, 23) ist.

11. Verfahren nach Anspruch 9, wobei die periodische Phasenschwankung durch eine externe Phasenmodulation des lokalen Oszillators (13) erzeugt wird.

12. Homodynempfänger mit einem lokalen Oszillator (13) mit einstellbarer Momentanfrequenz, einem Mischer (28), einem Leistungsdetektor (16) und einer Regelelektronik (21, 23), die derart miteinander verknüpft sind, daß

  • ein moduliertes Kommunikationssignal (11) mit einem Ausgangssignal des lokalen Oszillators (13) mischbar ist,
  • der Leistungsdetektor (16) mit einem an einem Ausgang (26) des Mischers (28) bereit gestellten Ausgangssignal (u(t)) ansteuerbar ist,
  • die Leistung des Ausgangssignals des Mischers (28) durch den Leistungsdetektor (16) auswertbar ist und, daß
  • die Momentanfrequenz des lokalen Oszillators (13) in Abhängigkeit von der Leistung des Ausgangssignals des Mischers (28) regelbar ist, um **dadurch** das Ausgangssignal des Leistungsdetektors (16) zu maximieren.

13. Homodynempfänger nach Anspruch 12, wobei der Mischer (28) umfasst:

  - ein optisches 180°-Hybrid (12), in dem das Kommunikationssignal und das Ausgangssignal des lokalen Oszillators (13) überlagert werden,
  - zwei Photodioden (18, 19) in Differenzschaltung, und
  - einen wechselstromgekoppelten Verstärker (20),

  wobei die Photodioden (18, 19) derart in Serie geschaltet sind, daß der Differenzstrom der Photodioden (18, 19) in einen Eingang des Verstärkers (20) geführt ist und, daß ein Ausgang (28) des Verstärkers (20) mit einem Eingang des Leistungsdetektors (16) verbunden ist.

14. Homodynempfänger nach Anspruch 12 oder 13, wobei die Regelelektronik ein Schleifenfilter (21) und einen Signalgenerator (23) aufweist, deren Ausgangssignale (22, 30) überlagert werden.

15. Homodynempfänger nach Anspruch 14, wobei sowohl die Amplitude des Störsignals (30), als auch die Bandbreite der Phasenregelschleife einstellbar ist.

16. Homodynempfänger nach Anspruch 15, wobei über eine separate Regeleinheit der Restphasenfehler und die Bitfehlerwahrscheinlichkeit durch geeignete Wahl der Signalamplitude und der Bandbreite der Phasenregelschleife optimiert ist.

17. Homodynempfänger nach einem der Ansprüche 12-16, wobei der lokale Oszillator (13) ein Laseroszillator ist.

18. Homodynempfänger nach Anspruch 12 oder 13, der zusätzlich eine Verarbeitungseinheit (27) aufweist, die mit einem Ausgang (26) des Mischers (28) verbunden ist.

19. Homodynempfänger nach Anspruch 18, wobei die Verarbeitungseinheit (27) einen Daten-Entscheider und einen Fenster-Komparator aufweist.

20. Optisches Intersatelliten-Kommunikationssystem mit mindestens einem Homodynempfänger nach einem der Ansprüche 12 - 19.

**Claims**

1. Method for synchronization of a local oscillator (13) in a homodyne receiver (10) with respect to an optical communication signal, the homodyne receiver containing, in addition to the local oscillator (13) with adjustable instantaneous frequency, a mixer (28), a power detector (16) and regulating electronics (21, 23), whereby the following steps are carried out:

   • mixing of the optical communication signal with an output signal from the local oscillator (13),
   • actuation of the power detector (16) with an output signal (u(t)) made available at the output (26) of the mixer (28),
   • evaluation of the power of the output signal (u(t)) from the mixer (28) by the power detector (16),
   • adjustment of the instantaneous frequency of the local oscillator (13) in order to maximize the output signal of the power detector (16).

2. Method according to Claim 1, wherein the synchronization is a phase synchronization.

3. Method according to Claim 1 or 2, wherein the output signal (u(t)) of the mixer (28) is a baseband signal.

4. Method according to Claim 3, wherein the output signal of the power detector (16) is maximized by maximization of the power of the baseband signal (u(t)) at the output (26) of the mixer (28).

5. Method according to Claim 1 or 2, wherein the instantaneous frequency of the local oscillator (13) is regulated by application of an interfering signal (30).

6. Method according to Claim 5, wherein the interfering signal (30) is made available by the regulating electronics (21, 23).

7. Method according to Claim 1 or 2, wherein evaluation of the power of the output signal (u(t)) of the mixer (28) is carried out across several data bits of the optical communication signal.

8. Method according to Claim 1, wherein the homodyne receiver (10) is an optical homodyne receiver (10) for binary-modulated communication signals.

9. Method according to Claim 1, wherein a phase error between the phase of the optical communication signal and the phase of the output signal of the local oscillator (13) is identified by superimposition of a small, periodic phase variation (30) - preferably of an amplitude less than o/2

   - in the local oscillator (13) and by synchronous demodulation of the variation in the output signal of the power detector (16) resulting from this superimposition.

10. Method according to Claim 9, wherein the periodic phase variation (30) is generated by an internal frequency modulation of the local oscillator (13), preferably by an addition with an output signal from a loop filter (21) which is a component of the regulating electronics (21, 23).

11. Method according to Claim 9, wherein the periodic phase variation is generated by external phase modulation of the local oscillator (13).

12. Homodyne receiver with a local oscillator (13) with regulatable instantaneous frequency, a mixer (28), a power detector (16) and regulating electronics (21, 23) connected together in such a way that:

   • a modulated communication signal (11) can be mixed with an output signal from the local oscillator (13),
   • the power detector (16) can be actuated by an output signal (u(t)) available at the output (26) of the mixer (28),
   • the power of the output signal of the mixer (28) can be evaluated by the power detector (16), and

• the instantaneous frequency of the local oscillator (13) can be regulated as a function of the power of the output signal of the mixer (28) in order by this means to maximize the output signal of the power detector (16).

13. Homodyne receiver according to Claim 12, wherein the mixer (28) comprises:

   - an optical 180° hybrid (12) in which the communication signal and the output signal of the local oscillator (13) are superimposed,
   - two photodiodes (18, 19) in a differential circuit, and
   - an AC-coupled amplifier (20),

   wherein the photodiodes (18, 19) are serially connected in such a way that the differential current from the photodiodes (18, 19) is conducted to an input of the amplifier (20) and that an output (26) of the amplifier (20) is connected to an input of the power detector (16).

14. Homodyne receiver according to Claim 12 or 13, wherein the regulating electronics comprises a loop filter (21) and a signal generator (23), their output signals (22, 30) being superimposed.

15. Homodyne receiver according to Claim 14, wherein the amplitude of the interfering signal (30), as well as the bandwidth of the phase regulation loop, is adjustable.

16. Homodyne receiver according to Claim 15, wherein, by means of a separate regulation unit, the residual phase error and the bit error probability are optimized by appropriate choice of the signal amplitude and bandwidth of the phase regulation loop.

17. Homodyne receiver according to any one of Claims 12-16, wherein the local oscillator (13) is a laser oscillator.

18. Homodyne receiver according to Claim 12 or 13 which further comprises a processor unit (27), connected to an output (26) of the mixer (28).

19. Homodyne receiver according to Claim 18, wherein the processor unit (27) comprises a data decider and a window comparator.

20. Optical inter-satellite communication system with at least one homodyne receiver according to any one of Claims 12-19.

**Revendications**

1. Procédé de synchronisation d'un oscillateur local (13) dans un récepteur homodyne (10) eu égard à un signal de communication optique, dans lequel le récepteur homodyne, en plus de l'oscillateur local (13) ayant une fréquence instantanée réglable, contient un mélangeur (28), un détecteur de puissance (16) et une électronique de régulation (21, 23), dans lequel les étapes suivantes sont exécutées :

   - mélange du signal de communication optique avec un signal de sortie de l'oscillateur local (13),
   - commande du détecteur de puissance (16) avec un signal de sortie (u(t)) mis à disposition en sortie (26) du mélangeur (28),
   - évaluation de la puissance du signal de sortie (u(t)) du mélangeur (28) par le détecteur de puissance (16),
   - régulation de la fréquence instantanée de l'oscillateur local (13) pour optimiser le signal de sortie du détecteur de puissance (16).

2. Procédé selon la revendication 1, dans lequel il s'agit concernant la synchronisation d'une synchronisation de phase.

3. Procédé selon la revendication 1 ou 2, dans lequel le signal de sortie (u(t)) du mélangeur (28) est un signal de bande de base.

4. Procédé selon la revendication 3, dans lequel le signal de sortie du détecteur de puissance (16) est optimisé en ce que la puissance du signal de bande de base (u(t)) en sortie (26) du mélangeur (28) est optimisée.

**5.** Procédé selon la revendication 1 ou 2, dans lequel la fréquence instantanée de l'oscillateur local (13) est régulée par l'application d'un signal de perturbation (30).

**6.** Procédé selon la revendication 5, dans lequel le signal de perturbation (30) est mis à disposition par l'électronique de régulation (21, 23).

**7.** Procédé selon la revendication 1 ou 2, dans lequel l'évaluation de la puissance du signal de sortie (u(t)) du mélangeur (28) se fait par plusieurs bits de données du signal de communication optique.

**8.** Procédé selon la revendication 1, dans lequel il s'agit concernant le récepteur homodyne (10) d'un récepteur homodyne optique (10) de signaux de communication binaires modulés.

**9.** Procédé selon la revendication 1, dans lequel une erreur de phase entre la phase du signal de communication optique et la phase du signal de sortie de l'oscillateur local (13) est déterminée par marquage d'une petite fluctuation de phase périodique (30) - de préférence avec une amplitude qui est inférieure à o/2 - dans l'oscillateur local (13) et par une démodulation synchrone de la fluctuation du signal de sortie du détecteur de puissance (16) résultant de ce marquage.

**10.** Procédé selon la revendication 9, dans lequel la fluctuation de phase périodique (30) est générée par une modulation de fréquence interne de l'oscillateur local (13), de préférence par une addition avec un signal de sortie d'un filtre de boucle (21) qui est une composante de l'électronique de régulation (21, 23).

**11.** Procédé selon la revendication 9, dans lequel la fluctuation de phase périodique est générée par une modulation de phase externe de l'oscillateur local (13).

**12.** Récepteur homodyne qui comporte un oscillateur local (13) ayant une fréquence instantanée réglable, un mélangeur (28), un détecteur de puissance (16) et une électronique de régulation (21, 23) qui sont connectés ensemble de façon telle que

    - un signal de communication modulé (11) peut être mélangé avec un signal de sortie de l'oscillateur local (13),
    - le détecteur de puissance (16) peut être commandé avec un signal de sortie (u(t)) mis à disposition en sortie (26) du mélangeur (28),
    - la puissance du signal de sortie du mélangeur (28) peut être évaluée par le détecteur de puissance (16), et que
    - la fréquence instantanée de l'oscillateur local (13) peut être régulée en fonction de la puissance du signal de sortie du mélangeur (28), pour optimiser de ce fait le signal de sortie du détecteur de puissance (16).

**13.** Récepteur homodyne selon la revendication 12, dans lequel le mélangeur (28) comprend :

    - un circuit hybride optique à 180° (12), dans lequel le signal de communication et le signal de sortie de l'oscillateur local (13) sont superposés,
    - deux photodiodes (18, 19) en circuit différentiel, et
    - un amplificateur couplé en courant alternatif (20),

dans lequel les photodiodes (18, 19) sont commutées en série de façon telle que le courant différentiel des photodiodes (18, 19) est amené dans une entrée de l'amplificateur (20) et qu'une sortie (26) de l'amplificateur (20) est reliée à une entrée du détecteur de puissance (16).

**14.** Récepteur homodyne selon la revendication 12 ou 13, dans lequel l'électronique de régulation présente un filtre de boucle (21) et un générateur de signaux (23) dont les signaux de sortie (22, 30) sont superposés.

**15.** Récepteur homodyne selon la revendication 14, dans lequel tant l'amplitude du signal de perturbation (30) que la bande passante de la boucle de régulation de phase peuvent être régulées.

**16.** Récepteur homodyne selon la revendication 15, dans lequel, par une unité de régulation séparée, l'erreur de phase résiduelle et la probabilité d'erreur sur binaires sont optimisées par une sélection appropriée des amplitudes de signaux et de la bande passante de la boucle de régulation de phase.

**17.** Récepteur homodyne selon l'une des revendications 12 à 16, dans lequel l'oscillateur local (13) est un oscillateur à laser.

**18.** Récepteur homodyne selon la revendication 12 ou 13, qui présente en outre une unité de traitement (27) qui est reliée à une sortie (26) du mélangeur (28).

**19.** Récepteur homodyne selon la revendication 18, dans lequel l'unité de traitement (27) comprend un décideur de données et un comparateur de fenêtre.

**20.** Système de communication optique inter-satellites comportant au moins un récepteur homodyne selon l'une des revendications 12 à 19.

Fig. 1

u(t)

11    10    26    27

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4110138C1
- EP 00112884 A
- EP 535494 A2
- EP 535494 A
- US 5007106 A
- EP 959571 A

**In der Beschreibung aufgeführte Nicht-Patentliteratur**

- **A.L. SCHOLTZ et al.** Realization of a 10-im homodyne receiver. *J. Lightwave Technol,* 1987, vol. 5 (4), 625-632
- **L.G. KAZOVSKY.** Decision-driven phase-locked loop for optical homodyne receivers: Performance analysis and laser linewidth requirements. *J. Lightwave Technol.,* 1985, vol. 3 (6), 1238-1247
- 1064nm, 565Mbit/s PSK transmission experiment with homodyne receiver using synchronization bits. *Electron. Lett.,* 1991, vol. 27 (19), 1692-1693
- **W. GLATT et al.** Optical PSK homodyne system using a switched residual carrier for phase synchronization. *Electron. Lett.,* 1996, vol. 32 (15), 1386-1387
- Modulated residual carrier method with envelope processing. *Konferenzproceedings CRL International Symposium on Optical Communications and Sensing toward the next Century,* 1999, 215-216
- **F. DAVID.** New phase synchronization method for optical BPSK homodyne receivers. *Proc. CLEO'99,* 1999, 434